# FASCICULE DE BREVET EUROPEEN

(11) **EP 2 360 842 B1**
(45) Date de publication et mention de la délivrance du brevet: **03.10.2012**
(21) Numéro de dépôt: 11154412.8
(22) Date de dépôt: 14.02.2011
(51) Int. Cl.: H04B 1/40

(54) **Procédé de détection du fonctionnement d'un dispositif de transmission sans fil de signaux de voix**
Verfahren zum Nachweis des Betriebes eines Gerätes zur drahtlosen Übertragung von Sprachsignalen
Method of detecting the functioning of a wireless voice transmission device

(30) Priorité: 16.02.2010 FR 1051083
(43) Date de publication de la demande: 24.08.2011
(73) Titulaire: Retali, Dominique, 94170 Le Perreux sur Marne (FR)
(72) Inventeur: Retali, Dominique, 94170 Le Perreux sur Marne (FR)
(74) Mandataire: Parzy, Benjamin Alain

(56) Documents cités:
- WO-A1-2009/009689
- WO-A2-2009/022822
- US-A1- 2002 021 798
- US-A1- 2009 030 693

## Description

La présente invention concerne un procédé de détection du fonctionnement d'un dispositif de transmission sans fil de signaux de voix.

### ARRIERE PLAN DE L'INVENTION

On sait que la communication vocale sans fil se développe de plus en plus en raison de la mobilité qu'elle offre aux interlocuteurs tout en leur permettant de rester en relation. **Le document** US2002/0021798 **décrit un système de commutation permettant une telle communication vocale sans fil.**

Dans la plupart des cas, une interruption de la transmission des signaux vocaux est immédiatement perceptible et présente pour simple inconvénient l'obligation pour l'un des interlocuteurs de rappeler l'autre.

Toutefois, dans certaines circonstances, il est important que l'interlocuteur qui est en situation de locuteur, c'est-à-dire qui émet les signaux vocaux, soit immédiatement informé que la communication est interrompue avec l'interlocuteur qui se trouve dans une situation de réception du message vocal transmis. C'est le cas, par exemple, lors d'une communication entre un agent de piste se trouvant au sol et un membre d'équipage d'un avion se trouvant à bord de celui-ci.

Par ailleurs, pour des raisons de facilité de mise en oeuvre et d'économie, on utilise généralement pour établir la communication des dispositifs qui ne comportent aucun système de détection de défaillance de la transmission. En outre, pour diverses raisons, ces dispositifs ont une faible portée et leur liaison peut être facilement perturbée par des évènements extérieurs, de sorte que même pour un fonctionnement normal du système de transmission sans fil, la communication peut être interrompue. De tels dispositifs peuvent entraîner de graves conséquences lorsqu'une interruption de la communication empêche le signalement d'un danger.

### OBJET DE L'INVENTION

Un but de l'invention est de proposer un procédé de détection du fonctionnement d'un dispositif de transmission de signaux de voix mettant en oeuvre des dispositifs connus, couramment disponibles.

### RESUME DE L'INVENTION

A cet effet, le procédé selon l'invention met en oeuvre un dispositif de transmission de signaux de voix entre deux équipements de sorte qu'au moins l'un des équipements peut émettre un signal de voix et l'autre des équipements peut recevoir ce signal de voix, et qui sont reliés par une chaîne de transmission sans fil. **Selon l'invention**, le procédé comporte, lors d'une phase de transmission d'un signal de voix, les étapes de :
- détecter au niveau de l'équipement émetteur une présence d'un signal de voix à l'émission, et élaborer en réponse un signal de présence de voix à l'émission ;
- détecter au niveau de l'équipement récepteur une présence ou une absence d'un signal de voix à la réception, et élaborer en réponse un signal indicateur de voix à la réception ;
- transmettre le signal indicateur de voix à la réception depuis l'équipement récepteur vers l'équipement émetteur ;
- comparer dans l'équipement émetteur le signal de présence de voix à l'émission et le signal indicateur de voix à la réception, et déclencher une alarme si les signaux comparés ne sont pas cohérents.

Ainsi, dans le cas d'une interruption de la transmission du signal de voix, aucun signal de voix à la réception n'est détecté au niveau de l'équipement récepteur. Le signal indicateur de voix à la réception indique alors une absence de signal de voix à la réception et est transmis vers l'équipement émetteur, de sorte que la comparaison du signal de présence de voix à l'émission et du signal indicateur de voix à la réception révèle immédiatement la défaillance et permet le déclenchement d'une alarme auprès du locuteur.

Selon une version avantageuse de l'invention, le procédé comporte en outre les étapes de :
- transmettre le signal de présence de voix à l'émission depuis l'équipement émetteur vers l'équipement récepteur ;
- comparer dans l'équipement récepteur le signal de présence de voix à l'émission et le signal indicateur de voix à la réception, et déclencher une alarme si les signaux comparés ne sont pas cohérents.

Ainsi, l'interlocuteur en situation de récepteur est également informé de l'interruption de la transmission du signal de voix et se met dans une position d'attente jusqu'à ce que la communication soit rétablie. Par exemple, dans le cas d'un pilote d'avion en manoeuvre de parking, celui-ci interrompt sa manoeuvre jusqu'à ce qu'il ait la preuve qu'il est de nouveau en communication avec l'agent de piste.

Selon un premier mode de mise en oeuvre, hors d'une phase de transmission du signal de voix, le procédé comporte les étapes de :
- élaborer dans l'équipement émetteur un signal d'absence de voix;
- élaborer dans l'équipement récepteur un signal d'absence de voix ;
- transmettre le signal d'absence de voix dans l'équipement récepteur depuis l'équipement récepteur vers 1 équipement émetteur ;
- comparer dans l'équipement émetteur le signal d'absence de voix dans l'équipement émetteur et le signal d'absence de voix dans l'équipement récepteur et déclencher une alarme si les signaux comparés ne sont pas cohérents.

Selon un deuxième mode de mise en oeuvre, hors d'une phase de transmission du signal de voix, le procédé comporte les étapes de :
- transmettre un signal de voix simulée entre les deux équipements ;
- détecter au niveau de l'équipement émetteur une présence d'un signal de voix simulée à l'émission, et élaborer en réponse un signal de présence de voix simulée à l'émission ;
- détecter au niveau de l'équipement récepteur une présence ou une absence d'un signal de voix simulée à la réception, et élaborer en réponse un signal indicateur de voix simulée à la réception ;
- transmettre le signal indicateur de voix simulée à la réception depuis l'équipement récepteur vers l'équipement émetteur ;
- comparer dans l'équipement émetteur le signal de présence de voix simulée à l'émission et le signal indicateur de voix simulée à la réception, et déclencher une alarme si les signaux comparés ne sont pas cohérents.

Hors d'une phase de transmission du signal de voix, ces deux modes de mise en oeuvre permettent de contrôler le dispositif de transmission de signaux de voix de façon à s'assurer que celui-ci est constamment prêt à détecter une défaillance de la transmission de signaux de voix.

Selon une version avantageuse du premier mode de mise en oeuvre, le procédé comporte en outre les étapes de
- transmettre le signal d'absence de voix dans l'équipement émetteur depuis l'équipement émetteur vers l'équipement récepteur;
- comparer dans l'équipement récepteur le signal d'absence de voix dans l'équipement émetteur et le signal d'absence de voix dans l'équipement récepteur, et déclencher une alarme si les signaux comparés ne sont pas cohérents.

De la même façon, selon une version avantageuse du deuxième mode de mise en oeuvre, le procédé comporte en outre les étapes de :
- transmettre le signal de présence de voix simulée à l'émission depuis l'équipement émetteur vers l'équipement récepteur ;
- comparer dans l'équipement récepteur le signal de présence de voix simulée à l'émission et le signal indicateur de voix simulée à la réception, et déclencher une alarme si les signaux comparés ne sont pas cohérents.

Selon un mode de réalisation privilégié de l'invention, le procédé comporte en outre l'étape de déclencher l'alarme de l'un des équipements si l'étape de comparaison dans ledit équipement n'a pu être réalisée.

Selon une version avantageuse de l'invention, le procédé comporte en outre les étapes de :
- élaborer dans l'équipement récepteur, en réponse au signal transmis par l'équipement émetteur, un signal d'acquisition de réception dudit signal;
- élaborer dans l'équipement émetteur, en réponse au signal transmis par l'équipement récepteur, un signal d'acquisition de réception dudit signal;
- transmettre le signal d'acquisition de réception dans l'équipement émetteur depuis l'équipement émetteur vers l'équipement récepteur;
- transmettre le signal d'acquisition de réception dans l'équipement récepteur depuis l'équipement récepteur vers l'équipement émetteur;
- déclencher l'alarme de l'un des équipements si le signal d'acquisition de réception dans l'autre équipement ne lui a pas été transmis.

### BREVE DESCRIPTION DES DESSINS

D'autres caractéristiques et avantages de l'invention apparaîtront à la lecture de la description qui suit d'un mode de mise en oeuvre particulier en référence aux figures ci-jointes, parmi lesquelles :
- la figure 1 est une représentation schématique d'un dispositif de transmission mettant en oeuvre le procédé selon l'invention lorsqu'un signal de voix est émis par l'équipement émetteur mais n'est pas reçu par l'équipement récepteur,
- la figure 2 est une représentation identique à celle de la figure 1 lorsqu'un signal de voix est émis et est convenablement reçu par l'équipement récepteur,
- la figure 3 est une vue analogue à celle de la figure 1 mettant en oeuvre le procédé selon l'invention, selon un premier mode de réalisation, en l'absence de signaux de voix émis,
- la figure 4 est une représentation schématique d'un dispositif de transmission mettant en oeuvre le procédé selon l'invention, selon un deuxième mode de réalisation, en l'absence de signaux de voix émis.

### DESCRIPTION DETAILLEE DE L'INVENTION

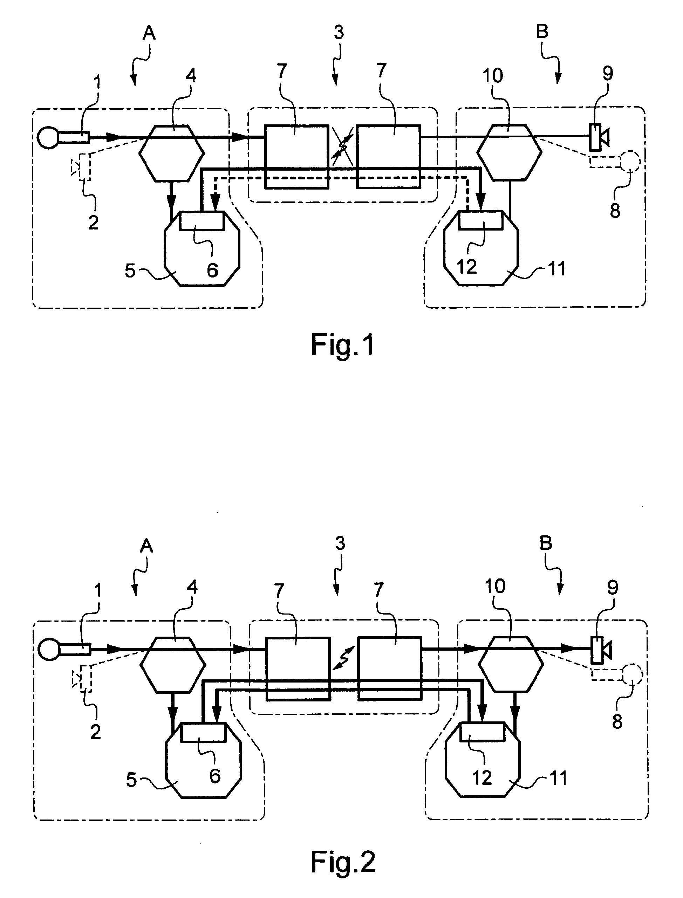

En référence à la figure 1, le procédé selon l'invention est destiné à être mis en oeuvre dans un dispositif de transmission de signaux de voix comprenant un équipement A comportant un organe émetteur de signaux de voix 1 et un organe récepteur de signaux de voix 2 reliés à une chaîne de transmission sans fil 3 par l'intermédiaire d'un détecteur de signaux vocaux 4. Le détecteur de signaux vocaux 4 est en outre relié à une unité de traitement 5 comportant un premier organe de transmission de données 6 lui-même relié à la chaîne de transmission 3.

La chaîne de transmission 3 comporte deux organes émetteurs-récepteurs sans fil 7 aptes à communiquer l'un avec l'autre.

Comme l'équipement A, l'équipement B comporte un organe émetteur de signaux de voix 8 et un organe récepteur de signaux de voix 9 reliés à la chaîne de transmission 3 par l'intermédiaire d'un détecteur de signaux vocaux 10. Le détecteur de signaux vocaux 10 est également relié à une unité de traitement 11 comportant un second organe de transmission de données 12.

Au moins l'un des détecteurs de signaux vocaux 4, 10 est par exemple un détecteur détectant dans un signal sonore émis par l'organe émetteur de signaux de voix (1 ou 8) des signaux représentatifs d'une élocution au milieu de bruits ambiants. Selon un mode de réalisation privilégiée, au moins l'un des détecteurs de signaux vocaux 4, 10 est un détecteur détectant dans le signal sonore, en plus des signaux représentatifs d'une élocution, des fronts montants de forte pente, chaque front montant représentant le début d'une syllabe. Par expérimentation, il est d'ailleurs possible à partir de la valeur de la pente d'un front d'associer une syllabe audit front.

Dans la situation illustrée par la figure 1, le porteur de l'équipement A est en position de locuteur, c'est-à-dire que l'organe émetteur de signaux de voix 1 émet un signal et l'équipement B est en position de récepteur. En outre, dans la situation illustrée, la chaîne de transmission est supposée interrompue du point de vue de la transmission des signaux de voix mais assure néanmoins la transmission de signaux de données. Pour mieux illustrer cette situation, l'organe récepteur de signaux de voix 2 et l'organe émetteur de signaux de voix 8 ont été représentés en pointillé.

Selon l'invention, lorsque le signal de voix est détecté par le détecteur de signaux de voix 4, un signal de présence de voix à l'émission est élaboré par l'unité de traitement 5 et est transmis de façon continue par le premier organe de transmission de données 6. De son côté, dans la situation invoquée, le détecteur de signaux de voix 10 ne perçoit aucun signal de voix de sorte qu'un signal indicateur de voix à la réception indiquant l'absence d'un signal de voix à la réception est élaboré par l'unité de traitement 11 et est transmis de façon continue par le second organe de transmission de données 12.

La comparaison dans chaque unité de traitement entre le signal émis et le signal reçu révèle une incohérence et une alarme est déclenchée dans chacun des équipements.

La figure 2 illustre la situation dans laquelle l'équipement A est dans une situation de locuteur et l'équipement B est dans une situation de récepteur, la chaîne de transmission assurant tout à la fois la transmission des signaux de voix et la transmission des signaux de données. Comme précédemment le premier organe de transmission de données transmet un signal de présence de voix à l'émission élaboré par la première unité de traitement 5. Le signal de voix transmis est détecté par le détecteur 10.

Selon l'invention, la seconde unité de traitement 11 élabore alors un signal indicateur de voix à la réception indiquant la présence d'un signal de voix à la réception et le second organe de transmission de données 12 transmet ce signal au premier organe de transmission de données 6. Comme précédemment, une comparaison est effectuée par la première unité de traitement 5 entre le signal émis et le signal reçu. De même, une comparaison est effectuée dans la seconde unité de traitement 11 entre le signal émis et le signal reçu. Cette comparaison révèle une cohérence. La transmission de signaux de voix se poursuit donc normalement.

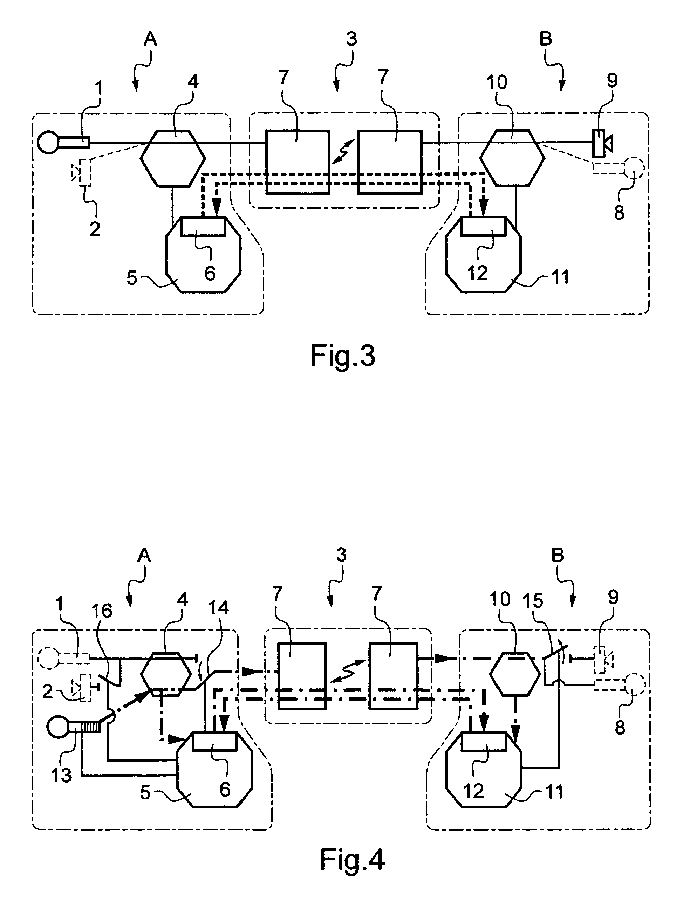

La figure 3 illustre la situation dans laquelle aucun signal vocal n'est émis par les organes émetteurs de signaux de voix 1 et 8. En application d'un premier mode de réalisation, on prévoit alors de faire transmettre par le premier organe de transmission de données 6 un signal d'absence de voix à l'émission au second organe de transmission 12 et de faire retourner alors au premier organe par le second organe un signal d'acquisition de réception du signal provenant du premier équipement. En outre, par multiplexage, le second organe de transmission de données transmet vers le premier organe de transmission de données un signal d'absence de voix à la réception. Et le premier organe de transmission de données retourne alors un signal d'acquisition de réception du signal provenant du deuxième équipement.

Ainsi, une comparaison est effectuée dans l'unité de traitement 5 entre le signal émis par le premier organe de transmission de données 6 et le signal reçu provenant du second organe de transmission de données 12. Si les signaux sont cohérents, ceci signifie que la transmission de données est correctement réalisée entre l'équipement A et l'équipement B. Si au contraire les signaux ne sont pas cohérents, ceci signifie que la transmission de données a été interrompue et la première unité de traitement 5 déclenche alors une alarme au niveau du premier équipement A. Le processus de contrôle se répète tant qu'aucun signal de voix n'est émis. Une comparaison analogue est effectuée dans la seconde unité de traitement 11 entre le signal émis par le second organe de transmission de données 12 et le signal reçu du premier organe de transmission de données 6 et une alarme est déclenchée dans le cas d'une anomalie.

Selon un mode de réalisation privilégié, si l'unité de traitement 5 n'acquiert pas le signal d'acquisition de réception émis par le second organe de transmission de données 12, l'unité de traitement 5 déclenche alors une alarme au niveau du premier équipement A. De la même façon, si l'unité de traitement 11 n'acquiert pas le signal d'acquisition de réception émis par le premier organe de transmission de données 6, l'unité de traitement 11 déclenche alors une alarme au niveau du deuxième équipement B.

Les signaux d'absence de voix peuvent être constitués par des messages contenant des données représentatives de l'état de l'organe de transmission correspondant.

La figure 4 illustre la situation dans laquelle aucun signal vocal n'est émis par les organes émetteurs de signaux de voix 1 et 8 en application d'un deuxième mode de réalisation. Ici, l'équipement A comporte également un organe simulateur de signaux de voix 13 relié, en parallèle de l'organe émetteur de signaux de voix 1 et de l'organe récepteur de signaux de voix 2, à un basculeur 14 par l'intermédiaire du détecteur de signaux vocaux 4. Le basculeur 14, relié à la chaîne de transmission sans fil 3, est monté basculant entre deux positions :
- une première position où seuls l'organe émetteur de signaux de voix 1 et l'organe récepteur de signaux de voix 2 sont reliés à la chaîne de transmission sans fil 3
- une deuxième position où seul l'organe simulateur de signaux de voix 13 est relié à la chaîne de transmission sans fil 3.

L'organe simulateur de signaux de voix 13 et le basculeur sont en outre reliés à l'unité de traitement 5.

L'équipement B comporte un interrupteur 15 entre le détecteur de signaux vocaux 10 et l'organe récepteur de signaux de voix 9, l'interrupteur 15 étant en outre relié à l'unité de traitement 11. Lorsque l'interrupteur 15 est en position fermé, le détecteur de signaux vocaux 10 est relié à l'organe récepteur de signaux voix 9. Symétriquement, l'équipement A comporte un interrupteur 16 entre le détecteur de signaux vocaux 4 et l'organe récepteur de signaux de voix 2 de sorte que lorsque l'interrupteur 16 est en position fermé, le détecteur de signaux vocaux 4 est relié à l'organe récepteur de signaux voix 2.

Dans la situation illustrée par la figure 4, en l'absence d'émission d'un signal vocal, l'unité de traitement 5 transmet un signal de basculement du basculeur 14 de sa première position à sa deuxième position et simultanément un signal de déclenchement de l'organe simulateur de signaux de voix 13. L'organe simulateur de signaux de voix 13 émet ensuite un signal vocal « simulé » qui est transmis à la chaîne de transmission sans fil 3.

L'équipement A se retrouve alors dans une situation de locuteur et l'équipement B dans une situation de récepteur, la chaîne de transmission assurant tout à la fois la transmission du signal vocal simulé et la transmission des signaux de données de la même façon que lorsqu'un signal de voix non « simulé » est émis par l'organe émetteur de signaux de voix 1 comme illustrée aux figures 1 et 2.

Avantageusement, lorsque le signal de voix « simulé » est détecté par le détecteur de signaux de voix 10, la seconde unité de traitement 11 transmet alors, en même temps que le signal indicateur de présence de signal de voix simulé en réception, un signal d'ouverture de l'interrupteur 15. De la même façon, l'interrupteur 16 s'ouvre lorsque le signal de voix « simulé » est détecté par le détecteur de signaux de voix 4. Ainsi, le signal vocal « simulé » n'est pas transmis aux organes récepteurs de signaux de voix 2 et 9.

Dès lors qu'un signal de voix est de nouveau émis par l'un des organes émetteur de voix 1 ou 8, l'unité de traitement 5 transmet un signal de basculement du basculeur 14 de sa seconde position à sa première position, simultanément un signal d'arrêt de l'organe simulateur de signaux de voix 13 et un signal de fermeture de l'interrupteur 16. La seconde unité de traitement 11 transmet, un signal de fermeture de l'interrupteur 15.

Il va de soi que quelque soit la situation et le mode de réalisation choisi, lorsque l'unité de traitement 5,11 n'acquiert non pas un signal de chaque équipement A et B mais aucun signal ou un unique signal de l'équipement A ou de l'équipement B, aucune comparaison ne peut être effectuée. Ceci signifie que le système est défaillant et l'unité de traitement 5,11 déclenche alors une alarme au niveau du premier équipement A ou du deuxième équipement B.

Bien entendu, l'invention n'est pas limitée au mode de mise en oeuvre décrit et est susceptible de variantes de réalisation sans sortir du cadre de l'invention tel que défini par les revendications.

En particulier, bien qu'ici des signaux d'acquisition de réception soient retournés entre le premier équipement A et le deuxième équipement B uniquement dans la situation illustrée à la figure 3, des signaux d'acquisition de réception pourront être échangés dans n'importe quelle autre situation invoquée.

En particulier, bien que l'invention ait été décrite dans les situations où seul l'organe émetteur de signaux de voix 1 émettait un signal de voix, le procédé selon l'invention s'applique bien entendu de façon symétrique lorsque c'est l'organe émetteur de signaux de voix 9 qui émet un signal de voix.

Bien que l'invention ait été décrite sous forme d'un procédé s'appliquant de façon symétrique aux deux équipements, on peut prévoir de simplifier le procédé en effectuant la détection de fonctionnement seulement au niveau de l'un des équipements, par exemple l'équipement détenu par un agent de piste se trouvant au sol. Dans ce cas, en l'absence de détection d'un signal de voix par le détecteur 10, on peut prévoir de simplement faire retransmettre par le second organe de traitement de données le signal reçu du premier organe de traitement de données. Aucune comparaison n'étant alors effectuée au niveau du second équipement.

En outre, dans la situation de la figure 1 pour laquelle le signal de voix n'est pas transmis convenablement mais le signal de présence de voix en émission est transmis convenablement, on peut prévoir de détecter l'anomalie de fonctionnement dans l'unité de traitement 11 et de transmettre directement à la première unité de transmission de données 6 un signal déclenchant une alarme dans l'équipement A.

Bien que l'on ait écrit que la détection du fonctionnement de la liaison vocale sans fil était assurée par simple comparaison des signaux émis et reçus dans chaque unité de traitement, il est également possible, lorsque le détecteur de signaux vocaux est un détecteur détectant également des fronts représentant le début de chaque syllabe d'une élocution, de comparer les fronts successifs émis et reçus dans chaque équipement pour s'assurer de la cohérence de ces fronts. Il est également possible, à l'aide d'un détecteur de signaux vocaux adapté, de détecter sur des intervalles de temps donnés, des fréquences de sons contenus dans une élocution et de comparer les fréquences émises et reçues dans chaque équipement pour s'assurer de la cohérence de ces fréquences. Une autre possibilité consiste, à l'aide d'un détecteur de signaux vocaux adapté (utilisant par exemple des algorithmes existants basés sur les Modèles de Markov cachés), de détecter des phonèmes contenus dans une élocution et de comparer les phonèmes émises et reçues dans chaque équipement pour s'assurer de la cohérence de ces phonèmes.

Par ailleurs, le dispositif de transmission de signaux de voix décrit peut être utilisé pour une communication entre deux personnes ou entre une part une personne et un appareil de communication phonique comme par exemple un système d'intercommunication de bord conventionnellement employé à bord d'aéronefs.

## Revendications

1. Procédé de détection du fonctionnement d'un dispositif de transmission de signaux de voix entre deux équipements (A,B) de sorte qu'au moins l'un des équipements peut émettre un signal de voix et l'autre des équipements peut recevoir ce signal de voix, et qui sont reliés par une chaîne de transmission sans fil (3), **le procédé étant caractérisé en ce qu'il comporte**, lors d'une phase de transmission d'un signal de voix, les étapes de :
- détecter au niveau de l'équipement émetteur une présence d'un signal de voix à l'émission, et élaborer en réponse un signal de présence de voix à l'émission ;
- détecter au niveau de l'équipement récepteur une présence ou une absence d'un signal de voix à la réception, et élaborer en réponse un signal indicateur de voix à la réception ;
- transmettre le signal indicateur de voix à la réception depuis l'équipement récepteur vers l'équipement émetteur ;
- comparer dans l'équipement émetteur le signal de présence de voix à l'émission et le signal indicateur de voix à la réception, et déclencher une alarme si les signaux comparés ne sont pas cohérents.

2. Procédé selon la revendication 1 comportant en outre les étapes de :
- transmettre le signal de présence de voix à l'émission depuis l'équipement émetteur vers l'équipement récepteur ;
- comparer dans l'équipement récepteur le signal de présence de voix à l'émission et le signal indicateur de voix à la réception, et déclencher une alarme si les signaux comparés ne sont pas cohérents.

3. Procédé selon la revendication 1 comportant, hors d'une phase de transmission du signal de voix, les étapes de :
- élaborer dans l'équipement émetteur un signal d'absence de voix;
- élaborer dans l'équipement récepteur un signal d'absence de voix ;
- transmettre le signal d'absence de voix dans l'équipement récepteur depuis l'équipement récepteur vers 1 équipement émetteur ;
- comparer dans l'équipement émetteur le signal d'absence de voix dans l'équipement émetteur et le signal d'absence de voix dans l'équipement récepteur et déclencher une alarme si les signaux comparés ne sont pas cohérents.

4. Procédé selon la revendication 3 comportant en outre les étapes de :
- transmettre le signal d'absence de voix dans l'équipement émetteur depuis l'équipement émetteur vers l'équipement récepteur;
- comparer dans l'équipement récepteur le signal d'absence de voix dans l'équipement émetteur et le signal d'absence de voix dans l'équipement récepteur, et déclencher une alarme si les signaux comparés ne sont pas cohérents.

5. Procédé selon la revendication 1, comportant, hors d'une phase de transmission du signal de voix, les étapes de :
- transmettre un signal de voix simulée entre les deux équipements ;
- détecter au niveau de l'équipement émetteur une présence d'un signal de voix simulée à l'émission, et élaborer en réponse un signal de présence de voix simulée à l'émission ;
- détecter au niveau de l'équipement récepteur une présence ou une absence d'un signal de voix simulée à la réception, et élaborer en réponse un signal indicateur de voix simulée à la réception ;
- transmettre le signal indicateur de voix simulée à la réception depuis l'équipement récepteur vers l'équipement émetteur ;
- comparer dans l'équipement émetteur le signal de présence de voix simulée à l'émission et le signal indicateur de voix simulée à la réception, et déclencher une alarme si les signaux comparés ne sont pas cohérents.

6. Procédé selon la revendication 5 comportant en outre les étapes de :
- transmettre le signal de présence de voix simulée à l'émission depuis l'équipement émetteur vers l'équipement récepteur ;
- comparer dans l'équipement récepteur le signal de présence de voix simulée à l'émission et le signal indicateur de voix simulée à la réception, et déclencher une alarme si les signaux comparés ne sont pas cohérents.

7. Procédé selon l'une quelconque des revendications précédentes comportant en outre l'étape de déclencher l'alarme de l'un des équipements si l'étape de comparaison dans ledit équipement n'a pu être réalisée.

8. Procédé selon l'une quelconque des revendications précédentes comportant en outre les étapes de :
- élaborer dans l'équipement récepteur, en réponse au signal transmis par l'équipement émetteur, un signal d'acquisition de réception dudit signal;
- élaborer dans l'équipement émetteur, en réponse au signal transmis par l'équipement récepteur, un signal d'acquisition de réception dudit signal;
- transmettre le signal d'acquisition de réception dans l'équipement émetteur depuis l'équipement émetteur vers l'équipement récepteur;
- transmettre le signal d'acquisition de réception dans l'équipement récepteur depuis l'équipement récepteur vers l'équipement émetteur;
- déclencher l'alarme de l'un des équipements si le signal d'acquisition de réception dans l'autre équipement ne lui a pas été transmis.

## Claims

1. A method of detecting the operation of a device for transmitting voice signals between two equipment items (A, B) so that at least one of the equipment items can send a voice signal and the other equipment item can receive this voice signal, the equipment items being linked by a wireless transmission chain (3), the method being **characterized in that** it comprises, during a phase for transmitting a voice signal, the steps of:
- detecting on the sending equipment item a presence of a voice signal on transmission, and generating in response a voice presence on transmission signal;
- detecting on the receiving equipment item a presence or an absence of a voice signal on reception, and generating in response a signal indicating voice on reception;
- transmitting the signal indicating voice on reception from the receiving equipment item to the sending equipment item;
- comparing in the sending equipment item the voice presence on transmission signal and the signal indicating voice on reception, and triggering an alarm if the compared signals are not consistent.

2. The method as claimed in claim 1 also comprising the steps of:
- transmitting the voice presence on transmission signal from the sending equipment item to the receiving equipment item;
- comparing in the receiving equipment item the voice presence on transmission signal and the signal indicating voice on reception, and triggering an alarm if the compared signals are not consistent.

3. The method as claimed in claim 1, comprising, outside of a voice signal transmission phase, the steps of:
- generating in the sending equipment item a voice absence signal;
- generating in the receiving equipment a voice absence signal;
- transmitting the voice absence signal in the receiving equipment item from the receiving equipment item to the sending equipment item;
- comparing in the sending equipment item the voice absence signal in the sending equipment item and the voice absence signal in the receiving equipment item and triggering an alarm if the compared signals are not consistent.

4. The method as claimed in claim 3, also comprising the steps of:
- transmitting the voice absence signal in the sending equipment item from the sending equipment item to the receiving equipment item;
- comparing in the receiving equipment item the voice absence signal in the sending equipment item and the voice absence signal in the receiving equipment item, and triggering an alarm if the compared signals are not consistent.

5. The method as claimed in claim 1, comprising, outside of a voice signal transmission phase, the steps of:
- transmitting a simulated voice signal between the two equipment items;
- detecting on the sending equipment item a presence of a simulated voice signal on transmission, and generating in response a simulated voice presence on transmission signal;
- detecting on the receiving equipment item a presence or an absence of a simulated voice signal on reception, and generating in response a signal indicating simulated voice on reception;
- transmitting the signal indicating simulated voice on reception from the receiving equipment item to the sending equipment item;
- comparing in the sending equipment item the simulated voice presence signal on transmission and the signal indicating simulated voice on reception, and triggering an alarm if the compared signals are not consistent.

6. The method as claimed in claim 5, also comprising the steps of:
- transmitting the simulated voice presence on transmission signal from the sending equipment item to the receiving equipment item;
- comparing in the receiving equipment item the simulated voice presence on transmission signal and the signal indicating simulated voice on reception, and triggering an alarm if the compared signals are not consistent.

7. The method as claimed in any one of the preceding claims, also comprising the step of triggering the alarm for one of the equipment items if the comparison stage in said equipment item could not be carried out.

8. The method as claimed in any one of the preceding claims, also comprising the steps of:
- generating in the receiving equipment item, in response to the signal transmitted by the sending equipment item, a signal indicating acquisition of reception of said signal;
- generating in the sending equipment item, in response to the signal transmitted by the receiving equipment item, a signal indicating acquisition of reception of said signal;
- transmitting the signal indicating acquisition of reception in the sending equipment item from the sending equipment item to the receiving equipment item;
- transmitting the signal indicating acquisition of reception in the receiving equipment item from the receiving equipment item to the sending equipment item;
- triggering the alarm for one of the equipment items if the signal indicating acquisition of reception in the other equipment item has not been transmitted to it.

## Patentansprüche

1. Verfahren zum Nachweis des Funktionierens einer Anordnung zur Übertragung von Sprachsignalen zwischen zwei Geräten (A, B) derart, dass mindestens eines der Geräte ein Sprachsignal aussenden kann und das andere Gerät dieses Sprachsignal empfangen kann, und die Geräte durch eine drahtlose Übertragungskette (3) miteinander verbunden sind, wobei das Verfahren **dadurch gekennzeichnet ist, dass** es bei einer Übertragungsphase eines Sprachsignals die folgenden Schritte umfasst:
- auf der Seite des Sendegerätes eine Präsenz eines Sprachsignals beim Senden erfassen und als Antwort ein Präsenzsignal für ein Sprachsignal beim Senden erstellen;
- auf der Seite des Empfangsgerätes eine Präsenz oder Absenz eines Sprachsignals beim Empfang erfassen und als Antwort ein Anzeigesignal für ein Sprachsignal beim Empfang erstellen;
- das Anzeigesignal für ein Sprachsignal beim Empfang vom Empfangsgerät an das Sendegerät übertragen ;
- im Sendegerät das Präsenzsignal für ein Sprachsignal beim Senden und das Anzeigesignal für ein Sprachsignal beim Empfang vergleichen und einen Alarm auslösen, falls die verglichenen Signale nicht kohärent sind.

2. Verfahren nach Anspruch 1, des Weiteren umfassend die Schritte:
- das Präsenzsignal für ein Sprachsignal beim Senden vom Sendegerät an das Empfangsgerät übertragen;
- im Empfangsgerät das Präsenzsignal für ein Sprachsignal beim Senden und das Anzeigesignal für ein Sprachsignal beim Empfang vergleichen, und, falls die verglichenen Signale nicht kohärent sind, einen Alarm auslösen.

3. Verfahren nach Anspruch 1, das außerhalb einer Übertragungsphase des Sprachsignals die folgenden Schritte umfasst:
- im Sendegerät ein Sprach-Absenzsignal erstellen;
- im Empfangsgerät ein Sprach-Absenzsignal erstellen;
- das Sprach-Absenzsignal im Empfangsgerät vom Empfangsgerät an das Sendegerät übertragen;
- im Sendegerät das Sprach-Absenzsignal im Sendegerät und das Sprach-Absenzsignal im Empfangsgerät miteinander vergleichen und einen Alarm auslösen, falls die verglichenen Signale nicht kohärent sind.

4. Verfahren nach Anspruch 3, des Weiteren umfassend die Schritte:
- das Sprach-Absenzsignal im Sendegerät vom Sendegerät an das Empfangsgerät übertragen;
- im Empfangsgerät das Sprach-Absenzsignal im Sendegerät und das Sprach-Absenzsignal im Empfangsgerät miteinander vergleichen, und einen Alarm auslösen, falls die verglichenen Signale nicht kohärent sind.

5. Verfahren nach Anspruch 1, das außerhalb einer Übertragungsphase des Sprachsignals die folgenden Schritte umfasst:
- ein Sprachsimulationssignals zwischen den beiden Geräten übertragen;
- auf der Seite des Sendegerätes eine Präsenz eines Sprachsimulationssignals beim Senden nachweisen und als Antwort ein Präsenzsignal für das Sprachsimulationssignal beim Senden erstellen;
- auf der Seite des Empfangsgerätes eine Präsenz oder eine Absenz eines Sprachsimulationssignals beim Empfang erfassen und als Antwort ein Anzeigesignal für das Sprachsimulationssignal beim Empfang erstellen;
- das Anzeigesignal für das Sprachsimulationssignal beim Empfang vom Empfangsgerät an das Sendegerät übertragen;
- im Sendegerät das Präsenzsignal für das Sprachsimulationssignal beim Senden und das Anzeigesignal für das Sprachsimulationssignal beim Empfang miteinander vergleichen, und, falls die verglichenen Signale nicht kohärent sind, einen Alarm auslösen.

6. Verfahren nach Anspruch 5, des Weiteren umfassend die Schritte:
- das Präsenzsignal für das Sprachsimulationssignal beim Senden vom Sendegerät an das Empfangsgerät übertragen;
- im Empfangsgerät das Signal für die Präsenz des Sprachsimulationssignals beim Senden und das Anzeigesignal für das Sprachsimulationssignal beim Empfang vergleichen, und einen Alarm auslösen, falls die verglichenen Signale nicht kohärent sind.

7. Verfahren nach einem der vorhergehenden Ansprüche, des Weiteren den Schritt umfassend, bei einem der Geräte den Alarm auslösen, falls der Schritt des Vergleichens in besagtem Gerät nicht realisiert werden konnte.

8. Verfahren nach einem der vorhergehenden Ansprüche, des Weiteren umfassend die Schritte:
- im Empfangsgerät als Antwort auf das durch das Sendegerät übertragene Signal ein Empfangserfassungssignal des besagten Signals erstellen;
- im Sendegerät als Antwort auf das durch das Empfangsgerät übertragene Signal ein Empfangserfassungssignal des besagten Signals erstellen;
- das Empfangserfassungssignal im Sendegerät vom Sendegerät an das Empfangsgerät übertragen;
- das Empfangserfassungssignal im Empfangsgerät vom Empfangsgerät an das Sendegerät übertragen;
- bei einem der Geräte den Alarm auslösen, falls das Empfangserfassungssignal im anderen Gerät nicht an dieses übertragen worden ist.
